# EUROPEAN PATENT APPLICATION

(11) **EP 2 325 269 A1**
(43) Date of publication of application: **25.05.2011**
(21) Application number: 10191621.1
(22) Date of filing: 18.11.2010
(51) Int. Cl.: C09D 11/00

(54) **Ink composition for ink jet recording**

(30) Priority: 19.11.2009 JP 2009264317; 30.03.2010 JP 2010078913
(71) Applicant: Seiko Epson Corporation, Shinjuku-ku Tokyo (JP)
(72) Inventor: Koganehira, Shuichi, Nagano 392-8502 (JP); Sato, Hironori, Nagano 392-8502 (JP); Yamamoto, Shinichi, Nagano 392-8502 (JP)
(74) Representative: Grünecker, Kinkeldey, Stockmair & Schwanhäusser Anwaltssozietät

(57) **Abstract**

An ink composition for ink jet recording includes a coloring material, water, a sparingly water-soluble alkanediol, a crystalline sugar alcohol solid at 20°C, and a (poly)alkylene glycol.

## Description

### BACKGROUND

### 1. Technical Field

The present invention relates to an ink composition for ink jet recording that can produce high-quality high-gloss recorded matter using various types of recording media, in particular, recording media, such as synthetic paper and printing paper, with low absorbency for water-based inks.

### 2. Related Art

Ink jet recording is a printing technique for forming a print by ejecting ink droplets and making the ink droplets adhere on a recording medium such as paper. Due to recent innovative advancement in ink jet recording technologies, ink jet recording is being increasingly employed in the field of high-definition printing that has previously been realized by silver halide photos and off-set printing. With this advancement, inks for ink jet recording have been developed which can produce images having glossiness of silver halide photos by ink jet recording using highly glossy recording media, i.e., specialty paper, comparable to the developing paper, art paper, and the like that have been used in the fields of silver halide photos and off-set printing. Moreover, inks for ink jet recording that can achieve the image quality of silver halide photos even when normal paper is used have also been developed.

Due to recent widespread of image-forming technologies using digital data, desk top publishing (DTP) has become popular in the fields of printing in particular. Even when printing is performed through DTP, a proof for correcting color is produced beforehand to confirm the gloss and color of actual prints. Ink jet recording is being applied to outputting of such proofs. In DTP, high color reproducibility and high color stability are required from the prints; thus, specialty paper for ink jet recording is normally used as recording media.

Proof paper, which is specialty paper for ink jet recording, is prepared such that a print made therefrom has the same gloss and color as those of an actually output print on printing paper. As such, the quality and material for specialty paper are appropriately adjusted according to the type of printing paper but it increases the production cost to make specialty paper that is compatible to many types of printing paper. Thus, for color proof usage, it is desirable from the technical viewpoint if ink jet recording can be performed on printing paper rather than specialty paper. If samples made by performing ink jet recording directly on printing paper without using specialty paper can be used as the final proof samples, possibly, the cost for proofing can be dramatically saved from the economical viewpoint. Moreover, synthetic paper prepared by mixing inorganic fillers and the like with polyethylene resins or polyester resins and forming the resulting mixtures into films is widely used in the field of printing and is attracting attentions as environmentally friendly products that have high recyclability. Thus, it is desirable from the environmental viewpoint if recording can be conducted on such synthetic paper.

Printing paper is coated paper having a coating layer for receiving oil-based inks on its surface and is characterized in that the coating layer has poor ink-absorbing property for water-based inks. Thus, when water-based pigmented inks commonly used in ink jet recording are used, the inks exhibit low permeability into the recording medium (printing paper) and bleeding or uneven aggregation may occur in the images.

To address the problem described above, for example, Japanese Unexamined Patent Application Publication No. 2005-194500 (Patent Document 1) discloses a pigment-based ink that reduces bleeding and exhibits excellent glossiness on specialty paper, in which a polysiloxane compound is used as a surfactant and an alkanediol such as 1,2-hexanediol is used as a dissolving aid. Japanese Unexamined Patent Application Publication No. 2003-213179 (Patent Document 2), Japanese Unexamined Patent Application Publication No. 2003-253167 (Patent Document 3), and Japanese Unexamined Patent Application Publication No. 2006-249429 (Patent Document 4) propose that high-quality images can are obtained by controlling the permeability of inks into recording media through addition of glycerin, a diol such as 1,3-butanediol, or a triol alcohol solvent such as pentanetriol to inks.

The inventors of the subject application have recently found that when an ink composition for ink jet recording contains a sparingly water-soluble alkanediol, a crystalline sugar alcohol solid at 20°C (also simply referred to as "crystalline sugar alcohol" hereinafter), and (poly)alkylene glycol, high-quality, high-gloss images free of bleeding or beading can be obtained even on a recording medium, such as printing paper, having low absorbency for water-based inks by printing that involves small landing time differences, for example. They also found that the ink composition has good clogging recoverability even when left in a high-temperature low-humidity open environment and a high-temperature normal-humidity closed environment. The invention has been made based on these findings.

### SUMMARY

It is desirable to provide an ink composition for ink jet recording which can produce high-quality, high-gloss images free of bleeding or beading on a recording medium, such as printing paper, having low absorbency to water-based inks by printing that involves small landing time differences and which has good clogging recoverability even when left in a high-temperature low-humidity open environment and a high-temperature normal-humidity closed environment.

The present invention provides:
(1) An ink composition for ink jet recording, comprising:
   a coloring material;
   water;
   a sparingly water-soluble alkanediol;
   a crystalline sugar alcohol solid at 20°C; and
   a (poly)alkylene glycol.
(2) The ink composition of (1), wherein the crystalline sugar alcohol is trehalose.
(3) The ink composition of (1), wherein the crystalline sugar alcohol is at least one selected from the group consisting of isotrehalose, neotrehalose, and sucrose.
(4) The ink composition of (1), further comprising a water-soluble alkanediol.
(5) The ink composition of (4), wherein the water-soluble alkanediol is an alkanediol having an OH group at one end or both ends.
(6) The ink composition of (4), wherein the water-soluble alkanediol is an alkanediol having 3 or more carbon atoms.
(7) The ink composition of (1), wherein the sparingly water-soluble alkanediol is an alkanediol having an OH group at one end.
(8) The ink composition of (1), wherein the sparingly water-soluble alkanediol is an alkanediol having 7 or more carbon atoms.
(9) The ink composition of (1), wherein the (poly)alkylene glycol is at least one selected from the group consisting of ethylene glycol, diethylene glycol, triethylene glycol, propylene glycol, dipropylene glycol, and tripropylene glycol.
(10) The ink composition of (1), wherein the (poly)alkylene glycol is (poly)propylene glycol.
(11) The ink composition of (10), wherein the (poly)propylene glycol is of a diol type.
(12) The ink composition of (10), wherein the (poly)propylene glycol is tripropylene glycol.
(13) The ink composition of (1), wherein a ratio of a sparingly water-soluble alkanediol content to a (poly)alkylene glycol content is 1:1 to 1:5.
(14) The ink composition of (1), wherein a ratio of a sparingly water-soluble alkanediol content to a crystalline sugar alcohol content is 1:1 to 1:5.
(15) The ink composition of (1), wherein a ratio of a sum of a (poly)alkylene glycol content and a crystalline sugar alcohol content to a sparingly water-soluble alkanediol content is 2:1 to 20:1.
(16) The ink composition of (4), wherein a ratio of a sparingly water-soluble alkanediol content to a water-soluble alkanediol content is 1:1 to 10:1.
(17) The ink composition of (1), wherein a sum of a sparingly water-soluble alkanediol content and a (poly)alkylene glycol content or a crystalline sugar alcohol content is 24 mass% or less relative to the ink composition.
(18) The ink composition of (4), wherein a sum of a water-soluble alkanediol content and a (poly)alkylene glycol content or a crystalline sugar alcohol content is 24 mass% or less relative to the ink composition.
(19) The ink composition of (4), wherein a sum of a (poly)alkylene glycol content or a crystalline sugar alcohol content, a water-soluble alkanediol content, and a sparingly water-soluble alkanediol content is 28 mass% or less relative to the ink composition.
(20) The ink composition of (1), wherein the sparingly water-soluble alkanediol is contained in an amount of 1.0 to 4.0 mass% relative to the ink composition.
(21) The ink composition of (1), wherein the (poly)alkylene glycol is contained in an amount of 2.0 to 10.0 mass% relative to the ink composition.
(22) The ink composition of (1), wherein the crystalline sugar alcohol is contained in an amount of 2.0 to 10.0 mass% relative to the ink composition.
(23) The ink composition of (4), wherein the water-soluble alkanediol is contained in an amount of 0.1 to 4 mass% relative to the ink composition.
(24) The ink composition of (1), wherein the sparingly water-soluble alkanediol is 1,2-octanediol.
(25) The ink composition of (1), further comprising a surfactant.
(26) The ink composition of (25), wherein the surfactant is a polyorganosiloxane surfactant or a gemini-type surfactant.
(27) The ink composition of (25), wherein the surfactant contains both a polyorganosiloxane surfactant and a gemini-type surfactant.
(28) The ink composition of (26), wherein the polyorganosiloxane surfactant has a dynamic surface tension of 26 mN/m or less at 1 Hz when prepared into an aqueous solution containing 20 mass% glycerin, 10 mass% 1,2-hexanediol, 0.1 mass% polyorganosiloxane surfactant, and 69.9 mass% water.

An ink composition for ink jet recording according to an aspect of the invention includes a coloring material, water, a sparingly water-soluble alkanediol, a crystalline sugar alcohol solid at 20°C, and (poly)alkylene glycol.

According to the ink composition for the ink jet recording, for example, high-quality, high-gloss images free of bleeding or beading can be produced on a recording medium, such as printing paper, having low absorbency for water-based inks by printing that involves small landing time differences. Moreover, the ink composition has good clogging recoverability even when left in a high-temperature low-humidity open environment and a high-temperature normal-humidity closed environment.

### DESCRIPTION OF EXEMPLARY EMBODIMENTS

### Definitions

In this specification, the hydrocarbon moiety of an alkanediol may be linear or branched.

"Water-soluble" means that the solubility in water at 20°C (the amount of a solute in 100 g water) is 10.0 g or more and "sparingly water-soluble" means that the solubility in water (the amount of a solute in 100 g water) is less than 1.0 g. "Miscible" means that a solution is semitransparent when the solubility in water at 20°C (the amount of a solute in 100 g water) is 10.0 g.

### Ink composition

An ink composition according to an embodiment at least includes a sparingly water-soluble alkanediol, a particular crystalline sugar alcohol, and (poly)alkylene glycol. Since these organic solvents are contained in combination with other components, for example, beading of the ink composition on printing paper can be suppressed, and high-quality, high-gloss images free of bleeding or beading can be produced by printing that involves small landing time differences. Moreover, the ink composition has good clogging recoverability even when left in a high-temperature low-humidity open environment and a high-temperature normal-humidity closed environment and exhibits good ejection stability.

In this specification, "beading" means density unevenness in similar colors that occurs locally when an image of one color is printed (e.g., when a 6-inch square image of one color ("one color" means that the number of colors printed is one and two or more ink compositions may be used to realize that color) is printed), and does not mean that some of the recording medium surface remains uncoated with inks. "Bleeding of coloring materials" refers to mixing of colors near the border between images of different colors printed adjacent to each other (e.g., 3-inch square images of different colors are printed next to each other). "Bleeding of solvents" refers to a phenomenon that occurs when images of different colors are printed adjacent to each other (e.g., 3-inch square images of different colors are printed next to each other), where the coating state near the border changes due to migration of coloring materials caused by exudation of solvents, thereby generating density unevenness in similar colors.

In this embodiment, occurrence of curling, i.e., curing of a recording medium with its printed surface at the inner side, can be suppressed even when thin printing paper or the like having a weight of 73.3 to 104.7 g/m² or 104.7 to 209.2 g/m² and more preferably thin printing paper having a weight of 73.3 to 104.7 g/m² is used as the recording medium.

The reason why high-quality images free of bleeding or beading can be obtained by adding a sparingly water-soluble alkanediol in addition to (poly)alkylene glycol and the crystalline sugar alcohol solid at 20°C is not exactly clear but is presumably as follows.

Beading of inks that occurs when images are recorded on printing paper is probably caused by a high surface tension of ink droplets since a large contact angle of ink droplets with respect to the printing paper surface causes printing paper to repel the ink. The repelled ink droplets that are adjacent to each other merge with each other as the ink flows between the droplets, and cause beading. Accordingly, in order to suppress beading of inks, it is considered preferable to decrease the surface tension of ink droplets and suppress the nonuniform flow of ink droplets.

Bleeding of inks that occurs when recording is conducted on printing paper is probably caused by a difference in surface tension between ink droplets since ink droplets that have adhered on the printing paper surface and have low surface tensions spread to ink droplets that have high surface tensions while they are still wet, resulting in flow of inks. The ink flow is presumably affected by the time difference in landing of adjacent ink droplets or the size of the droplets at the time of landing.

Accordingly, in order to suppress bleeding of inks, it is considered preferable to make uniform the surface tensions of the ink compositions. However, it is difficult to make uniform the time of landing of the adjacent ink droplets or the size of the droplets at the time of landing. Thus, it is considered preferable to suppress nonuniform flow of ink droplets.

According to the ink composition of this embodiment, an ink having a low surface tension and a low flowability is realized without impairing other qualities required of the ink composition. As a result, bleeding and beading are effectively suppressed.

### Sparingly water-soluble alkanediol

The ink composition of the embodiment contains a sparingly water-soluble alkanediol.

According to a preferred embodiment, the sparingly water-soluble alkanediol is an alkanediol with an OH group at one end. According to a preferred embodiment, the sparingly water-soluble alkanediol preferably has 7 or more carbon atoms and more preferably 7 to 10 carbon atoms. The sparingly water-soluble alkanediol is most preferably a sparingly water-soluble 1,2-alkanediol since beading can be more effectively suppressed. Examples of the sparingly water-soluble 1,2-alkanediol include 1,2-heptanediol, 1,2-octanediol, 5-methyl-1,2-hexanediol, 4-methyl-1,2-hexanediol, and 4,4-dimethyl-1,2-pentanediol. Among these, 1,2-octanediol is more preferred.

According to the preferred embodiment, the sparingly water-soluble alkanediol content may be appropriately determined to efficiently suppress bleeding and beading of inks but is preferably 1.0 to 4.0 mass%, more preferably 1.5 to 3.0 mass%, and most preferably 2.0 to 2.5 mass% relative to the entire composition. When the amount of the sparingly water-soluble alkanediol is within the aforementioned ranges, in particular, not below the lower limits, the beading can be sufficiently suppressed. When the amount of the sparingly water-soluble alkanediol is within the aforementioned ranges, in particular, not beyond the upper limits, the initial viscosity of the inks does not increase excessively and separation of the oil layer can be effectively prevented in a normal ink storage state, which is preferable from the viewpoint of ink storage property.

### (Poly)alkylene glycol

The ink composition contains a (poly)alkylene glycol.

The (poly)alkylene glycol contained in the ink composition is preferably HO-[(CH₂)ₙ-O)]ₘ-H (wherein n = 2 or 3 and m = 1 to 3). More preferably, the (poly)alkylene glycol is at least one selected from the group consisting of ethylene glycol, diethylene glycol, triethylene glycol, propylene glycol, dipropylene glycol, and tripropylene glycol. These compounds are oligomers obtained by addition polymerization of ethylene oxide and/or propylene oxide. According to a preferred embodiment, the (poly)alkylene glycol is more preferably (poly)propylene glycol and yet more preferably water miscible (poly)propylene glycol. The (poly)propylene glycol is not particularly limited but is preferably of a diol type from the viewpoints of ecotoxicity and environmental toxicity and more preferably tripropylene glycol (CAS No.24800-44-0) from the viewpoint of low hygroscopicity. The diol-type (poly)propylene glycol and tripropylene glycol are particularly preferably watermiscible.

The (poly)alkylene glycol content may be appropriately determined to efficiently suppress bleeding and beading of inks but is preferably 2.0 to 10.0 mass% and more preferably 4 to 8 mass% relative to the entire composition. When the amount of (poly)alkylene glycol is within the aforementioned range, in particular, not below the lower limit, the sparingly water-soluble alkanediol can be kept in a mixed state and not separated in a step of drying ink droplets. When the amount of (poly)alkylene glycol is within the aforementioned range, in particular, not beyond the upper limit, the initial viscosity of the inks does not increase excessively and separation of the oil layer can be effectively prevented in a normal ink storage state, which is preferable from the viewpoint of ink storage property. Moreover, this is also preferred from the viewpoint of gloss since an immiscible state can be avoided.

The (poly)alkylene glycol contained in the ink composition does not easily dry when put in a high-temperature, low-humidity environment and thus improves clogging recoverability of nozzles in an open environment at 50°C and 15% RH.

The ink composition also suppress excessively rapid aggregation of inks on a recording medium when a pigment is dispersed in a dispersing resin. Although the reason for this is not clear, the following can be presumed.

In general, the moment the ink lands on a recording medium, oleophilic components in the ink are still dispersed in water. However, when water is removed first during the drying process performed after landing of the ink on the recording medium, phase transition occurs from O/W to W/O. The water layer of the ink contains a pigment dispersed with a water-dispersible dispersing resin; however, the pigment cannot exist in the oil layer. Accordingly, when phase shift occurs from O/W to W/O, the flowability of the pigment in the water layer is suppressed by a wall of the oil layer and nonuniform flow occurs, resulting in aggregation of inks. However, the (poly)alkylene glycol causes water and the sparingly water-soluble solvents to be dissolved with each other and the mixed state can be retained for a long time, thus presumably inhibiting formation of a wall of the oil layer. As a result, the pigment can be retained in the mixed layer, nonuniform flow can be prevented, and the nonuniformity in permeation of the ink can be suppressed.

The ratio of the sparingly water-soluble alkanediol content to the (poly)alkylene glycol content is preferably 1:1 to 1:5 and more preferably 1:2 to 1:4. The ink ejection stability can be improved within this range.

### Crystalline sugar alcohol

The ink composition contains a crystalline sugar alcohol solid at 20°C.

The crystalline sugar alcohol is not particularly limited as long as advantageous effects can be obtained therefrom but is preferably at least one selected from the group consisting of maltitol, sorbitol, xylitol, erythritol, trehalose, isotrehalose, neotrehalose, and sucrose. More preferably, the crystalline sugar alcohol is trehalose or at least one selected from the group consisting of isotrehalose, neotrehalose, and sucrose. The crystalline sugar alcohol may be at least one monosaccharide and a disaccharide selected from the group consisting of maltose, maltitol, sorbitol, xylitol, erythritol, trehalose, isotrehalose, neotrehalose, and sucrose, or a tri- or higher saccharide obtained by combining these sugars or these sugars with other sugars.

Trehalose is a nonreducing disaccharide containing a glucoside bond between the 1-positions of glucose units. Since trehalose is a nonreducing sugar, browning caused by the Maillard reaction does not occur and trehalose is preferable from the viewpoint of storage stability of the ink. Moreover, since trehalose has high crystallinity, the water solubility is low and the hygroscopicity is extremely low.

Isotrehalose, neotrehalose, and sucrose are nonreducing disaccharides containing glucoside bonds. Since they are nonreducing sugars, browning caused by the Maillard reaction does not occur and they are preferable from the viewpoint of storage stability of the ink. Moreover, since they have high crystallinity, the water solubility is low and the hygroscopicity is extremely low.

The ink composition containing such a crystalline sugar alcohol can suppress beading caused by nonuniform flow that particularly occurs when printing is conducted with small landing time differences. Although the reason therefor is not clear, a crystalline sugar alcohol does not dissolve in solvents and has low water solubility and good crystallinity. Thus, a crystalline sugar alcohol solidifies immediately upon landing, thereby suppressing the flowability of the ink and nonuniform flow. This presumably contributes to prevention of beading. Moreover, since the flowability is suppressed immediately, ink droplets ejected later are not easily affected by the ink that had landed earlier. Thus, the nonuniform flow can be suppressed even when multiple colors are used, and beading can be suppressed. Moreover, since water-soluble sugars are contained in a large amount, the osmotic pressure is increased according to the van't Hoff's law and, the osmosis rate is also increased.

The ink composition containing a crystalline sugar alcohol can improve the clogging recoverability in a high-temperature, normal-humidity closed environment. The reason therefor is not clear but is presumably that because of the extremely low hygroscopicity, the waste ink remaining in the cap does not deprive water of the ink at the nozzle meniscus, resulting in high clogging recoverability in a space closed with a cap.

Since the ink composition containing a crystalline sugar alcohol prevents growth of ice crystals, the low-temperature storage stability of the ink is improved.

According to a preferred embodiment, the crystalline sugar alcohol content may be appropriately determined as long as the advantageous effects can be achieved but is preferably 2.0 to 10.0 mass% and more preferably 4.0 to 8.0 mass% relative to the entire composition. The crystalline sugar alcohol content is preferably within the aforementioned range, in particular, not below the lower limit, to improve the clogging recoverability in a high-temperature, normal-humidity closed environment and from the viewpoint of gloss. The crystalline sugar alcohol content is preferably within the aforementioned range, in particular, not above the upper limit, to prevent the initial viscosity of the ink from becoming excessively high and lower the freezing temperature, which is preferable from the viewpoint of low-temperature storage property of the ink.

According to a preferred embodiment, the ratio of the sparingly water-soluble alkanediol content to the crystalline sugar alcohol content is preferably 1:1 to 1:5 and more preferably 1:2 to 1:4. When the contents are within this range, beading can be suppressed even when the landing time intervals are short.

The ratio of the sum of the (poly)alkylene glycol content and the crystalline sugar alcohol content to the sparingly water-soluble alkanediol content is preferably 2:1 to 20:1. When the ratio is within this range, clogging recoverability can be ensured in a high-temperature low-humidity open environment and a high-temperature normal-humidity closed environment. The reason therefor is not clear but is presumably due to the balanced effect between the (poly)alkylene glycol that re-dissolves the ink that had solidified near the nozzles and the crystalline sugar alcohol that inhibits moisture absorption.

When the ratio is within the aforementioned range, highly gloss recorded matter free of beading can be obtained even when the landing time intervals are short. The reason therefor is not clear but is presumably due to the balanced effect between the (poly)alkylene glycol that mixes and dissolves the sparingly water-soluble alkanediol and the crystalline sugar alcohol that increases the solid content and thereby suppresses the nonuniform flow.

According to a preferred embodiment, the sum of the sparingly water-soluble alkanediol content and the (poly)alkylene glycol or crystalline sugar alcohol content is preferably 24 mass% or less relative to the ink composition. When the sum is within this range, the initial viscosity of the ink can be suppressed to a low level, beading can be prevented even with a recording medium having a low ink absorption, such as printing paper, and bleeding of the coloring materials can be suppressed.

According to a preferred embodiment, the sum of the sparingly water-soluble alkanediol content, the (poly)alkylene glycol content, and the crystalline sugar alcohol content is preferably 44 mass% or less relative to the ink composition. When the sum is within this range, the initial viscosity of the ink can be suppressed to a low level, beading nonuniformity can be prevented even with a recording medium having a low ink absorption, such as printing paper, and the clogging recoverability in a high-temperature low-moisture open environment and a high-temperature normal-humidity closed environment can be appropriately adjusted.

### Water-soluble alkanediol

According to a preferred embodiment, the ink composition may contain a water-soluble alkanediol in addition to the sparingly water-soluble alkanediol, the crystalline sugar alcohol, and the (poly)alkylene glycol. This is advantageous in that bleeding of the substances other than solid components in the ink composition, i.e., aqueous solutions including solvents, can be further suppressed.

According to a preferred embodiment, the water-soluble alkanediol is an alkanediol having an OH group at one end or both ends. The water-soluble alkanediol preferably has 3 or more carbon atoms and more preferably 3 to 6 carbon atoms. Examples of the water-soluble alkanediol contained in the ink composition include water-soluble hexanediols such as 1,2-hexanediol and 1,6-hexanediol, and 3-methyl-1,5-pentanediol. Of these, 1,2-hexanediol and 3-methyl-1,5-pentanediol are preferred. From the viewpoint of excellent ejection stability at high frequencies, 1,6-hexanediol may be used.

According to a preferred embodiment, the ratio of the sparingly water-soluble alkanediol content to the water-soluble alkanediol content is preferably 1:1 to 10:1 and more preferably 2:1 to 4:1. When the ratio is within this range, beading can be suppressed even when the landing time intervals are short.

According to a preferred embodiment, the sum of the water-soluble alkanediol content and the (poly)alkylene glycol content or the crystalline sugar alcohol content is preferably 24 mass% or less and more preferably 12 mass% or less relative to the ink composition. When the sum is within this range, beading can be suppressed even when the landing time intervals are short.

According to a preferred embodiment, the sum of the (poly)alkylene glycol or crystalline sugar alcohol content, the water-soluble alkanediol content, and the sparingly water-soluble alkanediol content is preferably 28 mass% or less and more preferably 14 mass% or less relative to the ink composition. When the sum is within this range, beading can be suppressed even when the landing time intervals are short.

According to a preferred embodiment, the amount of the water-soluble alkanediol added may be appropriately determined to efficiently suppress bleeding and beading of inks but is preferably 0.1 to 4.0 mass% relative to the entire composition.

The amount is more preferably 0.5 to 3.0 mass% and most preferably 1.0 to 2.0 mass%. When the amount of the water-soluble alkanediol is within the aforementioned ranges, in particular, not below the lower limits, the bleeding can be sufficiently suppressed. When the amount of the water-soluble alkanediol is within the aforementioned ranges, in particular, not beyond the upper limits, the initial viscosity of the inks does not increase excessively and separation of the oil layer can be effectively prevented in a normal ink storage state, which is preferable from the viewpoint of ink storage property. When 0.1 to 4 mass% of at least one selected from the group consisting of 1,2-hexanediol, 1,6-hexanediol, and 3-methyl-1,5-pentanediol which are preferred examples of the water-soluble alkanediol is contained relative to the entire composition, high-quality images free of bleeding or beading can be produced and the water-soluble alkanediol effectively works as an adjuster in the cases where the ejection performance is affected by the type of pigments and the amount of resin.

### Other solvents

According to a preferred embodiment, triethylene glycol monomethyl ether may also be contained. When 0.1 to 4 mass% of triethylene glycol monomethyl ether is contained, the clogging recoverability inside the ink cap for the ink jet head can be improved. Here, the "clogging inside the ink cap" means that the waste ink remaining in the cap is dried and solidified and clogs the micropores of an ink-absorbing agent such as non-woven cloth in the ink cap. When the clogging recoverability inside the ink cap is improved, the decrease in cleaning success ratio can be suppressed and the nozzle clogging recoverability can be improved.

### Coloring materials

The coloring materials used in the ink composition for the ink jet recording may be dyes or pigments but are preferably pigments from the viewpoints of lightfastness and water resistance. The coloring materials preferably contain pigments and the following dispersants that can disperse the pigments in the ink.

Examples of the pigments include inorganic pigments and organic pigments which can be used alone or in combination. Examples of the inorganic pigments include titanium oxide, iron oxide, and carbon black produced by a known method such as a contact method, a furnace method, or a thermal method. Examples of the organic pigments that can be used include azo pigments (azo lakes, insoluble azo pigments, condensed azo pigments, chelate azo pigments, etc.), polycyclic pigments (e.g., phthalocyanine pigments, perylene pigments, perinone pigments, anthraquinone pigments, quinacridone pigments, dioxazine pigments, thioindigo pigments, isoindolinone pigments, quinophthalone pigments, etc.), dye chelates (e.g., basic dye chelates, acidic dye chelates, etc.), nitro pigments, nitroso pigments, and aniline black.

Specific examples of the pigments can be provided according to the type (color) of the ink composition to be obtained. Examples of the pigments for an yellow ink composition include C.I. Pigment Yellow 1, 2, 3, 12, 14, 16, 17, 73, 74, 75, 83, 93, 95, 97, 98, 109, 110, 114, 128, 129, 138, 139, 147, 150, 151, 154, 155, 180, and 185. They may be used alone or in combination. Among these, at least one selected from the group consisting of C.I. Pigment Yellow 74, 110, 128, and 129 is preferably used. Examples of the pigments for a magenta ink composition include C.I. Pigment Red 5, 7, 12, 48(Ca), 48(Mn), 57(Ca), 57:1, 112, 122, 123, 168, 184, 202, 209; and C.I. Pigment Violet 19. They may be used alone or in combination. Among these, at least one selected from the group consisting of C.I. Pigment Red 122, 202, and 209 and C.I. Pigment Violet 19 is preferably used. They may be used alone or in combination and may be a solid solution. Examples of the pigments for a cyan ink composition include C.I. Pigment Blue 1, 2, 3, 15:3, 15:4, 15:34, 16, 22, and 60; and C.I. Vat Blue 4 and 60. They may be used alone or in combination. Among these, C.I. Pigment blue 15:3 and/or 15:4 is preferably used, and C.I. Pigment Blue 15:3 is particularly preferably used.

Examples of the pigment for a black ink composition include inorganic pigments including carbons such as lampblack (C.I. Pigment Black 6), acetylene black, furnace black (C.I. Pigment Black 7), channel black (C.I. Pigment Black 7), carbon black (C.I. Pigment Black 7) and the like and iron oxide pigments; and organic pigments such as aniline black (C.I. Pigment Black 1). In a preferred embodiment, carbon black is preferably used. Specific examples of the carbon black include #2650, #2600, #2300, #2200, #1000, #980, #970, #966, #960, #950, #900, #850, MCF-88, #55, #52, #47, #45, #45L, #44, #33, #32, and #30 (products of Mitsubishi Chemical Corporation up to here), SpecialBlack 4A and 550, Printex 95, 90, 85, 80, 75, 45, and 40 (products of Degussa Corporation up to here), Regal 660, RmogulL, monarch 1400, 1300, 1100, 800, and 900 (products of Cabot Corporation up to here), Raven 7000, 5750, 5250, 3500, 3500, 2500 ULTRA, 2000, 1500, 1255, 1200, 1190 ULTRA, 1170, 1100 ULTRA, and Raven 5000 UIII (products of Columbian Chemicals Company up to here).

The concentration of the pigment is not particularly limited since the pigment concentration (content) can be adequately adjusted while preparing the ink composition. The solid concentration of the pigment is preferably 7 mass% or more and more preferably 10 mass% or more. When ink droplets land on a recording medium, the ink spreads on the surface of the recording medium while it is still wet. However, when the pigment solid concentration is 7 mass% or more, the flowability of the ink after the wet-spreading of the ink stops is lost rapidly and bleeding on a recording medium such as printing paper can be further suppressed even when printed at a low resolution. In particular, when the sparingly water-soluble alkanediol, the crystalline sugar alcohol, and the (poly)alkylene glycol are used in combination, the ink in a wet state spreads even on a recording medium having a low ink absorbency, and the crystalline sugar alcohol speeds up the drying since it increases the solid content without excessively increasing the initial viscosity. Moreover, since use of the pigment increases the solid concentration in the ink, the flowability of the ink on the recording medium is decreased, and the bleeding can be suppressed. In particular, the effects of suppressing beading and bleeding are particularly strong when the recording time intervals between the landing of a first ink droplet and the landing of an adjacent or overlapping second ink droplet are in the range of about 0.1 seconds to less than 2 seconds. The "recording time intervals" refers to the time intervals between application of an ink on a recording medium and application of another ink adjacent to or overlapping the earlier ink or time intervals between two continuous recordings in the case where recording is conducted until an image is recorded by being divided up to the number of recording pixels.

The pigments described above are preferably pigments kneaded with dispersants described below from viewpoints of achieving bronzing prevention and storage stability of the ink composition and forming a color image having better glossiness.

### Dispersant

The ink composition preferably contains at least one resin that serves as a dispersant for dispersing the coloring material, the at least one resin being selected from styrene-acrylic acid copolymer resins, oxyethyl acrylate resins, urethane resins, and fluorene resins. More preferably, the ink composition contains at least one resin selected from oxyethyl acrylate resins and fluorene resins. These copolymer resins improve the dispersibility when adsorbed on a pigment.

Specific examples of hydrophobic monomers for the copolymer resins include methyl acrylate, methyl methacrylate, ethyl acrylate, ethyl methacrylate, n-propyl acrylate, n-propyl methacrylate, iso-propyl acrylate, iso-propyl methacrylate, n-butyl acrylate, n-butyl methacrylate, sec-butyl acrylate, sec-butyl methacrylate, tert-butyl acrylate, tert-butyl methacrylate, n-hexyl acrylate, n-hexyl methacrylate, n-octyl acrylate, n-octyl methacrylate, iso-octyl acrylate, iso-octyl methacrylate, 2-ethylhexyl acrylate, 2-ethylhexyl methacrylate, decyl acrylate, decyl methacrylate, lauryl acrylate, lauryl methacrylate, stearyl acrylate, stearyl methacrylate, 2-hydroxyethyl acrylate, 2-hydroxyethyl methacrylate, 2-hydroxypropyl acrylate, 2-hydroxypropyl methacrylate, 2-dimethylaminoethyl acrylate, 2-dimethylaminoethyl methacrylate, 2-diethylaminoethyl acrylate, 2-diethylaminoethyl methacrylate, glycidyl acrylate, glycidyl methacrylate, allyl acrylate, allyl methacrylate, cyclohexyl acrylate, cyclohexyl methacrylate, phenyl acrylate, phenyl methacrylate, nonylphenyl acrylate, nonylphenyl methacrylate, benzyl acrylate, benzyl methacrylate, dicyclopentenyl acrylate, dicyclopentenyl methacrylate, bornyl acrylate, bornyl methacrylate, 1,3-butanediol diacrylate, 1,3-butanediol dimethacrylate, 1,4-butanediol diacrylate, 1,4-butanediol dimethacrylate, ethylene glycol diacrylate, ethylene glycol dimethacrylate, diethylene glycol diacrylate, diethylene glycol dimethacrylate, triethylene glycol diacrylate, triethylene glycol dimethacrylate, tetraethylene glycol diacrylate, tetraethylene glycol dimethacrylate, polyethylene glycol diacrylate, polyethylene glycol dimethacrylate, neopentyl glycol diacrylate, 1,6-hexanediol diacrylate, 1,6-hexanediol dimethacrylate, dipropylene glycol diacrylate, dipropylene glycol dimethacrylate, trimethylolpropane triacrylate, trimethylolpropane trimethacrylate, glycerol acrylate, glycerol methacrylate, styrene, methylstyrene, vinyl toluene, and ortho-hydroxyethylated phenylphenol acrylate. These may be used alone or in combination.

Specific examples of the hydrophilic monomer include acrylic acid, methacrylic acid, maleic acid, and itaconic acid.

The copolymer resin of the hydrophobic monomer and the hydrophilic monomer described above is preferably at least one of a styrene-(meth)acrylic acid copolymer resin, a styrene-methylstyrene-(meth)acrylic acid copolymer resin, a styrene-maleic acid copolymer resin, a (meth)acrylic acid-(meth)acrylic acid ester copolymer resin, a styrene-(meth)acrylic acid-(meth)acrylic acid ester copolymer resin, and an ortho-hydroxyethylated phenylphenol acrylate-(meth)acrylic acid copolymer resin from viewpoints of achieving bronzing prevention and storage stability of the ink composition and forming a color image having better glossiness.

The copolymer resin may be a resin (styrene-acrylic acid resin) that contains a polymer obtained by a reaction of styrene with acrylic acid or an acrylic acid ester. Alternatively, the copolymer resin may be an acrylic acid-based water-soluble resin. Alternatively, their salts of sodium, potassium, ammonium, triethanol amine, triisopropanol amine, triethylamine, diethanol amine may be used.

The acid value of the copolymer resin is preferably 50 to 320 and more preferably 100 to 250 from viewpoints of achieving bronzing prevention and storage stability of the ink composition and forming a color image having better glossiness.

The mass-average molecular weight (Mw) of the copolymer resin is preferably 2,000 to 30,000 and more preferably 2,000 to 20,000 from viewpoints of achieving bronzing prevention and storage stability of the ink composition and forming a color image having better glossiness.

The glass transition temperature (Tg, measured in accordance with Japanese Industrial Standards K6900) of the copolymer resin is preferably 30°C or more and more preferably 50°C to 130°C from viewpoints of achieving bronzing prevention and storage stability of the ink composition and forming a color image having better glossiness.

In the pigment dispersion, the copolymer resin is adsorbed on the pigment in some cases and is left free in other cases. The maximum particle diameter of the copolymer resin is preferably 0.3 µm or less and the average particle diameter is preferably 0.2 µm or less (more preferably 0.1 µm or less) from viewpoints of achieving bronzing prevention and storage stability of the ink composition and forming a color image having better glossiness. The average particle diameter refers to an average of the dispersion diameter (accumulated 50% diameter) of particles of the pigment in the actual dispersion and can be measured with, e.g., Micro Track UPA (produced by Microtrac Inc.).

The copolymer resin content is preferably 20 to 50 parts by mass and more preferably 20 to 40 parts by mass relative to 100 parts by mass of the pigment from viewpoints of achieving bronzing prevention and storage stability of the ink composition and forming a color image having better glossiness.

An oxyethyl acrylate resin may be used as the copolymer resin. An oxyethyl acrylate resin is preferable since it decreases the initial viscosity of the ink, improves storage stability at high temperatures, and offers good clogging recoverability.

The oxyethyl acrylate resin is not particularly limited as long as it is a resin having an oxyethyl acrylate backbone but is preferably a compound represented by formula (I) below. Examples of the compound represented by formula (I) include a resin that contains, in terms of monomer molar ratio, 45% to 55% ortho-hydroxyethylated phenylphenol acrylate of CAS No. 72009-86-0, 20% to 30% acrylic acid of CAS No. 79-10-7, and 20% to 30% methacrylic acid of CAS No.79-41-4. These may be used alone or in combination. Although the monomer constitutional ratio is not particularly limited, the content of the ortho-hydroxyethylated phenylphenol acrylate of CAS No. 72009-86-0 is preferably 70 to 85 mass%, the content of acrylic acid of CAS No. 79-10-7 is preferably 5 to 15 mass%, and the content of methacrylic acid of CAS No.79-41-4 is preferably 10 to 20 mass%. 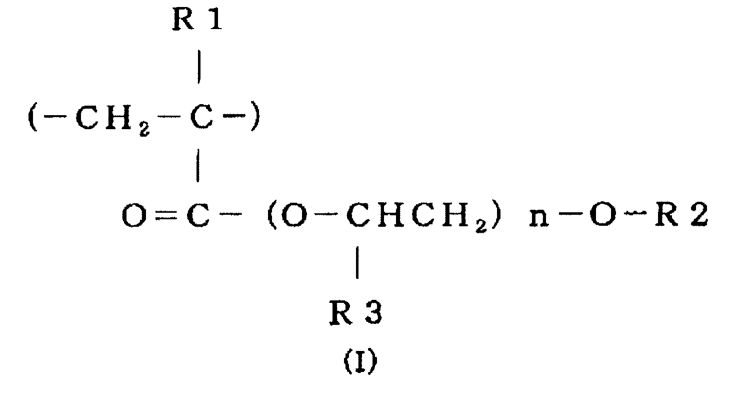 (where R1 and/or R3 each independently represents a hydrogen atom or a methyl group, R2 represents an alkyl group or an aryl group, and n represents an integer of 1 or more).

The compound represented by formula (I) is preferably nonylphenoxy polyethylene glycol acrylate or polypropylene glycol #700 acrylate.

The oxyethyl acrylate resin content is preferably 10 to 40 parts by mass and more preferably 15 to 25 parts by mass relative to 100 parts by mass of the pigment from viewpoints of achieving initial viscosity of the ink composition, storage stability of the ink composition, suppression of the aggregation nonuniformity, and formation of color images having good filling property.

The total of the ratios of the resins derived from hydroxyl-containing monomers selected from acrylic acid and methacrylic acid in the oxyethyl acrylate resin is preferably 30% to 70% and more preferably 40% to 60% of the oxyethyl acrylate resin from the viewpoints of achieving the initial viscosity of the ink composition, the storage stability of the ink composition, and the clogging recoverability.

The number-average molecular weight (Mn) of the oxyethyl acrylate resin before crosslinking is preferably 4000 to 9000 and more preferably 5000 to 8000 from the viewpoints of initial viscosity of the ink composition and the storage stability of the ink composition. Mn is measured by, for example, gel permeation chromatography (GPC).

In the pigment dispersion, the oxyethyl acrylate resin is adsorbed on the pigment in some cases and left free in other cases. The maximum particle diameter of the copolymer resin is preferably 0.3 µm or less, and the average particle diameter is preferably 0.2 µm or less (more preferably 0.1 µm or less) from the viewpoints of achieving bronzing prevention and storage stability of the ink composition and forming a color image having better glossiness. The average particle diameter refers to an average of the dispersion diameter (accumulated 50% diameter) of particles of the pigment in the actual dispersion and can be measured with, e.g., Micro Track UPA (produced by Microtrac Inc.).

The oxyethyl acrylate resin content is preferably 20 to 50 parts by mass and more preferably 20 to 40 parts by mass relative to 100 parts by mass of the pigment from viewpoints of achieving bronzing prevention and storage stability of the ink composition and forming a color image having better glossiness.

When a urethane resin is used as a pigment dispersant for fixing, bronzing prevention and storage stability of the ink composition can be achieved and a color image having better glossiness can be formed. A urethane resin is a resin containing a polymer obtained by reacting a diisocyanate compound and a diol compound. The urethane resin is preferably a resin having a urethane bond and/or an amide bond, and an acid group.

Examples of the diisocynate compound include araliphatic diisocyanate compounds such as hexamethylene diisocyanate and 2,2,4-trimethylhexamethylene diisocyanate, aromatic diisocyanate compounds such as toluylene diisocyanate and phenylmethane diisocyanate, and denaturated products thereof.

Examples of the diol compounds include polyethers such as polyethylene glycol and polypropylene glycol, polyesters such as polyethylene adipate and polybutylene adipate, and polycarbonates.

The acid value of the urethane resin is preferably 10 to 300 and more preferably 20 to 100 from viewpoints of achieving bronzing prevention and storage stability of the ink composition and forming a color image having better glossiness. The acid value is an amount (in terms of mg) of KOH needed to neutralize 1 g of resin.

The mass-average molecular weight (Mw) of the urethane resin before crosslinking is preferably 100 to 200,000 and more preferably 1,000 to 50,000 from viewpoints of achieving bronzing prevention and storage stability of the ink composition and forming a color image having better glossiness. Mw is measured by, for example, gel permeation chromatography (GPC).

The glass transition temperature (Tg, measured in accordance with Japanese Industrial Standards K6900) of the urethane resin is preferably -50°C to 200°C and more preferably -50°C to 100°C from viewpoints of achieving bronzing prevention and storage stability of the ink composition and forming a color image having better glossiness.

The urethane resin preferably contains a carboxyl group.

The urethane resin content is preferably 20 to 50 parts by mass and more preferably 20 to 40 parts by mass relative to 100 parts by mass of the pigment from viewpoints of achieving bronzing prevention and storage stability of the ink composition and forming a color image having better glossiness.

A fluorene resin may be used as a fixing pigment dispersant. A fluorene resin is preferable since it decreases the initial viscosity of the ink, improves storage stability at high temperatures, and offers good fixability to printing paper.

The fluorene resin is not particularly limited as long as it is a resin that has a fluorene backbone and, for example, can be obtained by copolymerizing the following monomer units.
cyclohexane, 5-isocyanate-1-(isocyanatemethyl)-1,3,3-trimethyl (CAS No.4098-71-9)
ethanol, 2,2'-[9H-fluoren-9-ylidenebis(4,1-phenyleneoxy)]bis (CAS No.117344-32-8)
propionic acid, 3-hydroxy-2-(hydroxymethyl)-2-methyl (CAS No.4767-03-7)
ethaneamine, N,N-diethyl- (CAS No.121-44-8)

The monomer constitutional ratio of the fluorene resin is not particularly limited as long as the resin has a fluorene backbone but is preferably 35 to 45 mass% 5-isocyanate-1-(isocyanatemethyl)-1,3,3-trimethyl cyclohexane (CAS No.4098-71-9), 40 to 60 mass% 2,2'-[9H-fluoren-9-ylidenebis(4,1-phenyleneoxy)]bis ethanol (CAS No.117344-32-8), 5 to 15 mass% 3-hydroxy-2-(hydroxymethyl)-2-methyl propionic acid (CAS No.4767-03-7), and 5 to 15 mass% N,N-diethyl-ethaneamine (CAS No.121-44-8).

The number-average molecular weight (Mn) of the fluorene resin before crosslinking is preferably 2000 to 5000 and more preferably 3000 to 4000 from the viewpoints of initial viscosity of the ink composition and the storage stability of the ink composition. Mn is measured by, for example, gel permeation chromatography (GPC).

In the pigment dispersion, the fluorene resin is adsorbed on the pigment in some cases and left free in other cases. The maximum particle diameter of the copolymer resin is preferably 0.3 µm or less and the average particle diameter is preferably 0.2 µm (more preferably 0.1 µm or less) from the viewpoints of achieving bronzing prevention and storage stability of the ink composition and forming a color image having better glossiness. The average particle diameter refers to an average of the dispersion diameter (accumulated 50% diameter) of particles of the pigment in the actual dispersion and can be measured with, e.g., Micro Track UPA (produced by Microtrac Inc.).

The fluorene resin content is preferably 20 to 50 parts by mass and more preferably 20 to 40 parts by mass relative to 100 parts by mass of the pigment from viewpoints of achieving bronzing prevention and storage stability of the ink composition and forming a color image having better fixability.

The ratio of the mass of the copolymer resin to the mass of the fixing pigment dispersant is preferably 1/2 to 2/1 but is more preferably 1/1.5 to 1.5/1 from viewpoints of achieving bronzing prevention and storage stability of the ink composition and forming a color image having better glossiness.

The ratio of the mass of the solid content of the pigment to the total solid content of the copolymer resin and the fixing pigment dispersant is preferably 100/40 to 100/100 from viewpoints of achieving bronzing prevention and storage stability of the ink composition and forming a color image having better glossiness.

A surfactant may be used as the dispersant. Examples of the surfactant include anionic surfactants such as fatty acid salts, higher alkyl dicarboxylic acid salts, higher alcohol sulfuric acid ester salts, higher alkyl sulfonic acid salts, condensates of higher fatty acids and amino acids, sulfosuccinic acid ester salts, naphthenic acid salts, liquid fatty oil sulfuric acid ester salts, and alkyl allyl sulfonic acid salts; cationic surfactants such as fatty acid amine salts, quaternary ammonium salts, sulfonium salts, and phosphonium salts; and nonionic surfactants such as polyoxyethylene alkyl ethers, polyoxyethylene alkyl esters, sorbitan alkyl esters, and polyoxyethylene sorbitan alkyl esters. When the surfactant is added to the ink composition, it naturally serves as a surfactant also.

### Surfactant

The ink composition for the ink jet recording may contain a surfactant. When a surfactant is used for a recording medium having a surface coated with a resin for receiving the ink, an image having good glossiness can be formed on a recording medium, such as photographic paper, that particularly requires good glossiness. In particular, bleeding between colors can be prevented and whitening caused by reflected light generated as the amount of adhered inks increases can be prevented even when a recording medium, such as printing paper, including a coating layer for receiving oil-based inks on its surface is used.

Polyorganosiloxane surfactants are preferred as the surfactant used in the ink composition. In forming an image to be recorded, the wettability to the recording medium surface is increased and the permeability of the ink can be increased. In the case where a polyorganosiloxane surfactant is used, the solubility of the surfactant in the ink improves due to incorporation of the above-described the sparingly water-soluble alkane diol and the (poly)alkylene glycol, and generation of the insoluble matter or the like can be suppressed. Thus, an ink composition having a higher ejection stability can be realized.

The polyorganosiloxane surfactant is not particularly limited but preferably has a dynamic surface tension of 26 mN/m or less at 1 Hz when prepared into an aqueous solution containing 20 mass% glycerin, 10 mass% 1,2-hexanediol, 0.1 mass% polyorganosiloxane surfactant, and 69.9 mass% water. The dynamic surface tension can be measured with, for example, a bubble pressure tensiometer BP2 (product of KRUSS GmbH).

Commercially available products may be used as the surfactant. For example, Olfine PD-501 and Olfine PD-570 (products of Nissin Chemical Industry Co., Ltd.) and BYK-347 and BYK-348 (products of BYK Additives and Instruments) can be used.

The polyorganosiloxane surfactant preferably contains at least one compound represented by formula (II) 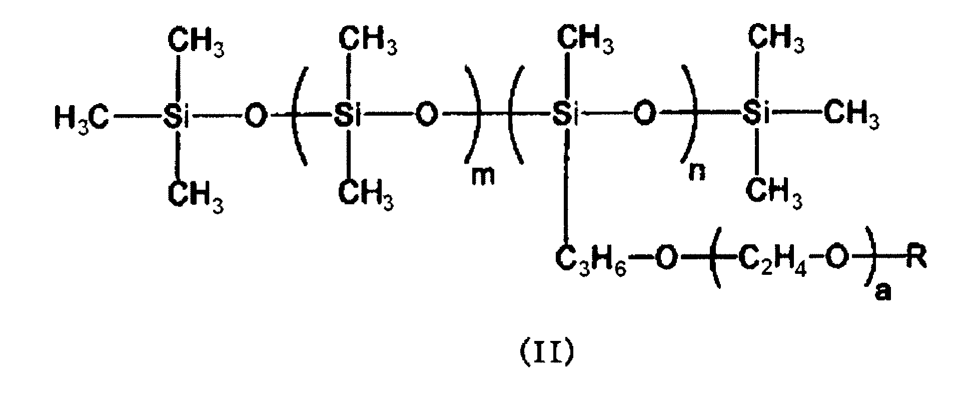 (wherein R represents a hydrogen atom or a methyl group, a represents an integer of 7 to 11, m represents an integer of 30 to 50, and n represents an integer of 3 to 5) or, more preferably at least one compound represented by formula (II) above but with R representing a hydrogen atom or a methyl group, a representing an integer of 9 to 13, m representing an integer of 2 to 4, and n representing an integer of 1 or 2. The polyorganosiloxane surfactant more preferably contains at least one compound represented by formula (II) but with R representing a hydrogen atom or a methyl group, a representing an integer of 6 to 18, m representing 0, and n representing 1. The polyorganosiloxane yet more preferably contains at least one compound represented by formula (II) but with R representing a hydrogen atom, a representing an integer of 2 to 5, m representing an integer of 20 to 40, and n representing an integer of 3 to 5. When such polyorganosiloxane surfactants are used, beading and bleeding of ink can be suppressed even when printing is conducted on printing paper as a recording medium.

When R of the compound represented by formula (II) is a methyl group, the beading of the ink can be further suppressed. When a compound represented by formula (II) with R representing a hydrogen atom is used in combination, bleeding of the ink can be further suppressed.

High-quality images free of bleeding or beading can be obtained by appropriately adjusting the mixing ratio of the compound represented by formula (II) with R representing a methyl group and the compound represented by formula (II) with R representing a hydrogen atom. The compounds can also serve as adjusters in cases where flowability differs depending on the type of pigment and the amount of resin.

The surfactant content in the ink composition is preferably 0.01 to 1.0 mass% and more preferably 0.05 to 0.50 mass%. In particular, when a surfactant represented by formula (II) with R representing a hydrogen group is used, it is preferable for the suppression of beading to decrease the amount of such a surfactant compared to when a surfactant represented by formula (II) with R representing a methyl group is used. When 0.01 to 0.1 mass% of a surfactant represented by formula (II) with R representing a hydrogen group is used, water repellency is exhibited and bleeding can be adjusted.

The surfactant is preferably a gemini surfactant. When a gemini surfactant is used in combination with the sparingly water-soluble alkanediol, the sparingly water-soluble solvent can be dispersed evenly and as a result the initial viscosity of the ink can be lowered. Accordingly, the amount of the coloring materials and anti-clogging agents added to the ink composition can be increased, and images with excellent color properties can be produced even on a recording medium with a porous surface coated with a resin or particles for receiving inks. In particular, bleeding between colors can be prevented and uneven color densities caused by ink flow between dots caused by the increase in amount of the adhering ink can be prevented even when a recording medium, such as printing paper, including a coating layer for receiving oil-based inks on its surface is used. The reason therefor is not clear but is presumably due to excellent orientation property of the gemini surfactant since a gemini surfactant forms an extremely stable oil gel with a water-soluble solvent, resulting in loss of the flowability of the coloring materials. The effect achieved by adding a gemini surfactant becomes stronger as the amount of the sparingly water-soluble solvent increases. Note that a "gemini surfactant" refers to a surfactant having a structure in which two surfactant molecules are bonded to each other through a linker.

The gemini surfactant is preferably a two-chain three-hydrophilic group-type surfactant in which hydrophilic moieties of a pair of single-chain surfactants are bonded to each other through a linker having a hydrophilic group. The hydrophilic moiety of the single chain type surfactant is preferably an acidic amino acid residue and the linker is preferably a basic amino acid. Specific examples thereof include surfactants synthesized by bonding a pair of single chain surfactants having glutamic acid or aspartic acid in the hydrophilic moiety to each other through a linker such as arginine, lysine, or histidine. It is preferable to use a surfactant represented by chemical formula (III) below as the gemini surfactant: 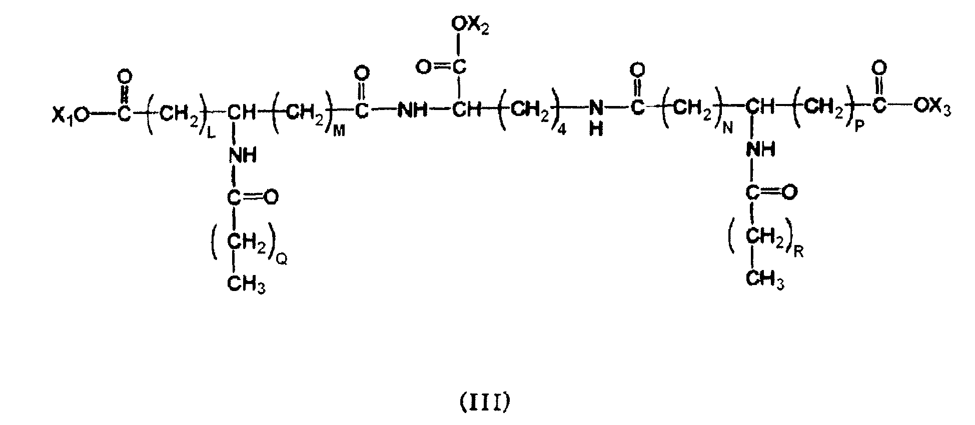 (wherein X₁, X₂, and X₃ each independently represent a hydrogen atom or an alkali metal but do not simultaneously represent a hydrogen atom or an alkali metal, L and M each independently represent 0 or 2 but do not simultaneously represent 0 or 2, N and P each independently represent 0 or 2 but do not simultaneously represent 0 or 2, and Q and R each represent an integer of 8 to 18).

In formula (III), the alkali metal is preferably Na and Q and R are each preferably about 10. Examples of such a compound include sodium salts of condensates of N-lauroyl-L-glutamic acid and L-lysine. Commercially available products may be used as the compound represented by the formula above. For example, Pellicer L-39 (produced by Asahi Kasei Chemicals Corporation) which is an aqueous solution containing 30% sodium salt of a condensate of N-lauroyl-L-glutamic acid and L-lysine is suitable for use.

When the gemini surfactant is used, in forming an image to be recorded, the wettability to the recording medium surface is increased and the permeability of the ink can be increased. As a result, uneven aggregation of inks can be suppressed even when an image is printed on printing paper serving as a recording medium. The solubility of the surfactant in the ink improves due to incorporation of the sparingly water-soluble alkanediol in the ink composition and generation of the insoluble matter or the like can be suppressed. Thus, an ink composition having a higher ejection stability can be realized.

The gemini surfactant content in the ink composition is preferably 0.01 to 1.0 mass% and more preferably 0.05 to 0.50 mass%.

According to a preferred embodiment, the polyorganosiloxane surfactant and the gemini surfactant can be simultaneously contained. When these two types of surfactants are simultaneously contained in the ink composition, high-quality images free of bleeding or beading can be produced. Moreover, the surfactants can also serve as adjusters in cases where flowability differs depending on the type of pigment and the amount of resin.

The ink composition may further contain another surfactant, namely, an acetylene glycol surfactant, an anionic surfactant, a nonionic surfactant, an ampholytic surfactant, or the like.

Examples of the acetylene glycol surfactant include 2,4,7,9-tetramethyl-5-decyn-4,7-diol, 3,6-dimethyl-4-octyn-3,6-diol, 3,5-dimethyl-1-hexyn-3-ol, and 2,4-dimethyl-5-hexyn-3-ol. Commercially available products may also be used as the acetylene glycol surfactant. Examples thereof include Olfine E1010, STG, and Y (trade names, products of Nissin Chemical Industry Co., Ltd.), Surfynol 61, 104, 82, 465, 485, and TG (trade names, products of Air Products and Chemicals Inc.).

### Water and other components

The ink composition for ink jet recording contains water as a solvent in addition to the sparingly water-soluble alkanediol, the (poly)alkylene glycol, the surfactants, and other additives described above. Water is preferably pure water or ultrapure water such as ion exchange water, ultrafiltered water, reverse osmosis water, and distilled water. Any one of these water sterilized by ultraviolet irradiation, hydrogen peroxide addition, or the like is preferred since generation of mold and bacteria can be prevented for a long time.

The ink composition may further contain a penetrant in addition to the components described above. Glycol ethers are suitable as the penetrant.

Specific examples of the glycol ethers include ethylene glycol monomethyl ether, ethylene glycol monoethyl ether, ethylene glycol mono-iso-propyl ether, ethylene glycol mono-n-butyl ether, ethylene glycol mono-iso-butyl ether, ethylene glycol mono-tert-butyl ether, ethylene glycol monomethyl ether acetate, diethylene glycol monomethyl ether, diethylene glycol monoethyl ether, diethylene glycol mono-n-propyl ether, diethylene glycol mono-iso-propyl ether, diethylene glycol mono-n-butyl ether, diethylene glycol mono-tert-butyl ether, triethylene glycol mono-n-butyl ether, propylene glycol monomethyl ether, propylene glycol monoethyl ether, propylene glycol mono-n-propyl ether, propylene glycol mono-iso-propyl ether, propylene glycol mono-n-butyl ether, propylene glycol mono-tert-butyl ether, dipropylene glycol monomethyl ether, dipropylene glycol monoethyl ether, dipropylene glycol mono-n-propyl ether, dipropylene glycol-iso-propyl ether, dipropylene glycol mono-n-butyl ether, dipropylene glycol mono-tert-butyl ether, and 1-methyl-1-methoxybutanol. These may be used alone or as a mixture of two or more.

Of the glycol ethers above, alkyl ethers of polyhydric alcohols are preferred. In particular, ethylene glycol monoethyl ether, ethylene glycol mono-n-butyl ether, diethylene glycol monomethyl ether, diethylene glycol monoethyl ether, diethylene glycol mono-n-butyl ether, propylene glycol monomethyl ether, propylene glycol monoethyl ether, propylene glycol monobutyl ether, triethylene glycol monomethyl ether, triethylene glycol monoethyl ether, and triethylene glycol mono-n-butyl ether are preferred.

Triethylene glycol monomethyl ether and triethylene glycol mono-n-butyl ether are more preferred.

The amount of the penetrant added may be appropriately determined but is preferably about 0.1 to 30 percent by mass and more preferably about 1 to 20 percent by mass.

The ink composition preferably further contains a recording medium-dissolving agent in addition to the components described above.

Pyrrolidones such as N-methyl-2-pyrrolidone, pyrrolidone carboxylic acid, and their alkali metal salts are preferably used as the recording medium-dissolving agent. The amount of the recording medium-dissolving agent added may be appropriately determined but is preferably about 0.1 to 30 percent by mass and more preferably about 1 to 20 percent by mass.

The ink composition for the ink jet recording preferably contains a humectant such as glycerin and its derivatives, e.g., 3-(2-hydroxyethoxy)-1,2-propanediol (CAS 14641-24-8) or 3-(2-hydroxypropoxy)-1,2-propanediol. Glycerin and its derivatives are preferred since they have a function of preventing drying and solidification of inks in ink jet nozzles and improve the clogging recoverability. Since the nonuniform flow of ink can be effectively suppressed by the crystalline sugar alcohol, 0.1 to 8 mass% of humectants can be contained.

The ink composition of may further contain a nozzle clogging-preventing agent, a preservative, an antioxidant, a conductivity adjustor, a pH adjustor, a viscosity adjustor, a surface tension adjustor, an oxygen absorber, and the like.

Examples of the preservative and fungicide include sodium benzoate, sodium pentachlorophenol, sodium 2-pyridinethiol-1-oxide, sodium sorbate, sodium dehydroacetate, and 1,2-dibenzinethiazolin-3-one (Proxel CRL, Proxel BND, Proxel GXL, Proxel XL-2, and Proxel TN produced by ICI).

Examples of the pH adjustor, dissolving aids, and the anti-oxidants include amines such as diethanolamine, triethanolamine, propanolamine, and morpholine and their modified products; inorganic salts such as potassium hydroxide, sodium hydroxide, and lithium hydroxide; ammonium hydroxide and quaternary ammonium hydroxide (e.g., tetramethyl ammonium); carbonates such as potassium carbonate, sodium carbonate, and lithium carbonate; other phosphates; N-methyl-2-pyrrolidone; ureas such as urea, thiourea, and tetramethylurea; allophanates such as allophanate and methyl allophanate; biurets such as biuret, dimethyl biuret, and tetramethyl biuret; and L-ascorbic acid and salts thereof.

The ink composition may contain an antioxidant and an ultraviolet absorber. Examples thereof include Tinuvin 328, 900, 1130, 384, 292, 123, 144, 622, 770, and 292, Irgacor 252 and 153, and Irganox 1010, 1076, 1035, and MD1024 produced by Ciba Specialty Chemicals, and oxides of lanthanides.

The ink composition can be manufactured by dispersing and mixing the components described above by adequate techniques. Preferably, first, a pigment, a polymer dispersant, and water are mixed with each other in an adequate dispersing device (e.g., a ball mill, a sand mill, an attritor, a roll mill, an agitator mill, a Henschel mixer, a colloid mill, an ultrasonic homogenizer, a jet mill, or an angstrom mill) to prepare a homogeneous pigment dispersion, and then a resin (resin emulsion) separately prepared, water, a water-soluble organic solvent, a sugar, a pH adjustor, a preservative, a fungicide, and the like are added thereto to be sufficiently dissolved and to thereby prepare an ink solution. After thorough stirring, the mixture is filtered to remove coarse particles and foreign matter that cause clogging to obtain a desired ink composition. The filtration is preferably conducted with a glass fiber filter as a filter. The glass fiber is preferably resin-impregnated glass fiber from the viewpoint of electrostatic absorption functions. The pore diameter of the glass fiber filter is preferably 1 to 40 micrometers and more preferably 1 to 10 micrometers from the viewpoints of productivity and removal of charged free resins by adsorption. The ejection stability can be improved by sufficiently removing the charged free resins by adsorption. An example of the filter is Ultipor GF Plus filter produced by Pall Corporation.

### Ink jet recording method

According to an ink jet recording method of an embodiment, droplets of the above-mentioned ink composition are ejected and allowed to adhere onto a recording medium to carry out printing. According to the recording method, synthetic paper or printing paper (OKT+, product of Oji Paper Co., Ltd.) is preferably used as the recording medium. In particular, even when low-resolution printing is conducted on art paper, high-quality paper for print-on-demand (POD) usages, or specialty paper for laser printers, high-quality images free of bleeding or beading can be achieved. Examples of the high-quality paper for POD usage include Ricoh business coat gloss 100 (product of Ricoh Corporation Ltd.). Examples of the specialty paper for laser printers include LPCCTA4 (product of Seiko Epson Corporation). Examples of the waterproof paper include Kareka (product of Mitsubishi Kagaku Media Co., Ltd.) and Laser Peach (product of Nisshinbo Postal Chemical Co., Ltd.).

### EXAMPLES

The invention will now be described in further detail by using Examples; however, these examples do not limit the scope of the invention.

### Preparation of ink composition

Components were mixed as shown in Table 1 below and each mixture was filtered with a 10 µm membrane filter to prepare an ink. Numerical figures in Table 1 indicate contents (mass%) in the ink. The resin content is indicated in terms of solid content (mass%). The oxyethyl acrylate resin (oxyethyl resin) in Table 1 is a resin having a molecular weight of 6900 and containing a monomer having an oxyethyl acrylate structure indicated as CAS No. 72009-86-0 in a monomer constitutional ratio of about 75 mass%.

The fluorene resin in Table 1 is a resin having a molecular weight of 3300 and containing a monomer having a fluorene backbone indicated as CAS No. 117344-32-8 in a monomer constitutional ratio of about 50 mass%.

The surfactant used was a polyorganosiloxane surfactant containing a compound represented by formula (II) where R represents a methyl group, a represents an integer of 6 to 18, m represents 0, and n represents 1; a compound represented by formula (II) where R represents a hydrogen atom, a represents an integer of 7 to 11, m represents an integer of 30 to 50, and n represents an integer of 3 to 5; and a compound represented by formula (II) where R represents a methyl group, a represents an integer of 9 to 13, m represents an integer of 2 to 4, and n represents an integer of 1 or 2. The surfactant had a dynamic surface tension of 26 mN/m or less at 1 Hz when prepared into an aqueous solution containing 20 mass% glycerin, 10 mass% 1,2-hexanediol, 0.1 mass% surfactant, and 69.9 mass% water. In particular, when the dynamic surface tension at 1 Hz (= one bubble per second) was measured with a bubble pressure tensiometer BP2 (product of KRUSS GmbH), the dynamic surface tension of the aqueous solution at 1 Hz was 24.6 mN/m. Tripropylene glycol was a product of Asahi Glass Co., Ltd. Trehalose was trehalose fine powder produced by Hayashibara Shoji, Inc.

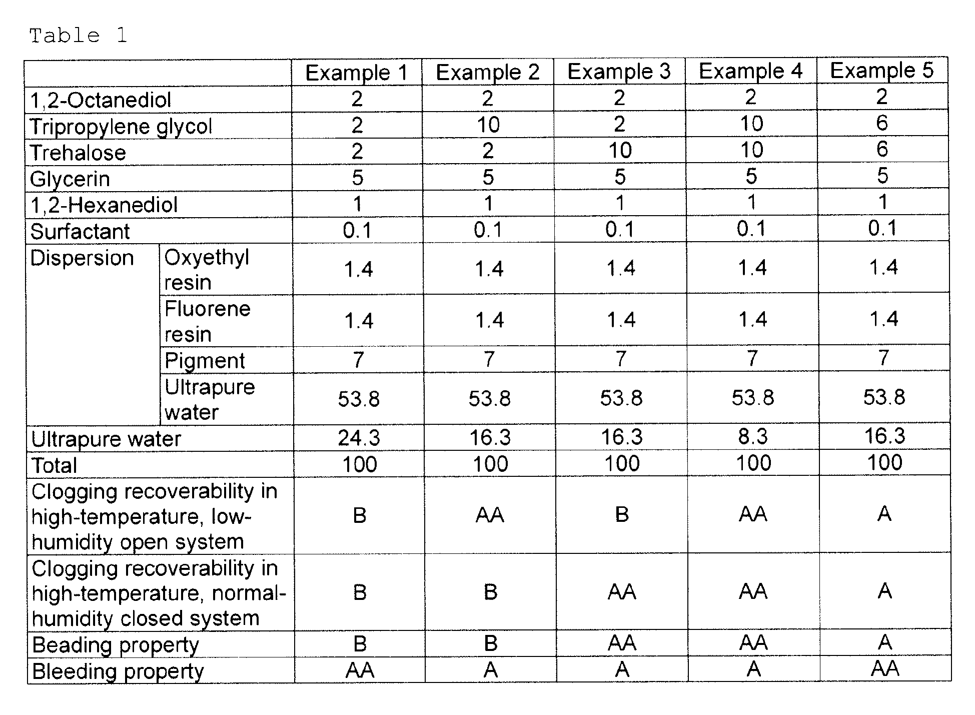

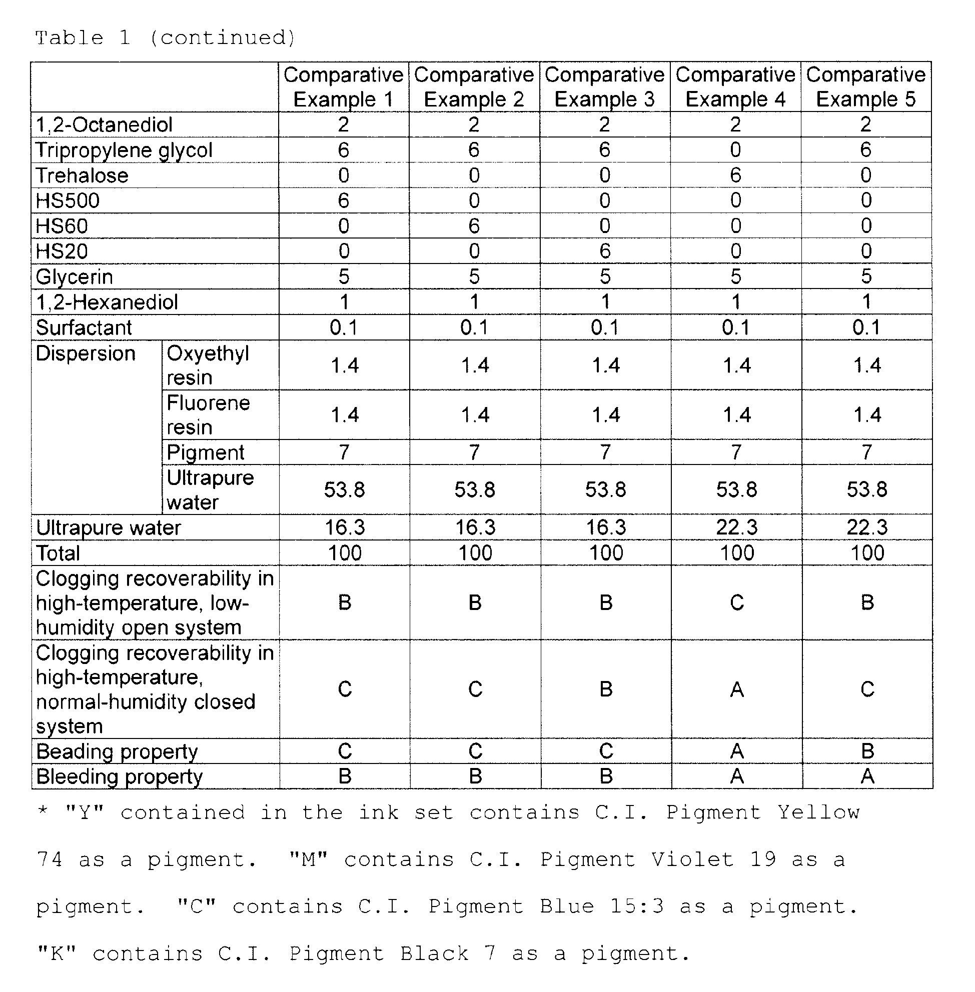

### Evaluation

Clogging recoverability in high-temperature, low-humidity open system

An ink set including Y, M, C, and K inks obtained as above was prepared and charged into an ink cartridge of an ink jet printer (PXG 930 product of Seiko Epson Corporation). The cartridge was loaded in the printer. Inks were charged in a printer head using a printer driver and it was confirmed that normal recording was possible. The carriage was moved to an ink cartridge replacement position. The printer was then unplugged. The ink cartridge and then the printer head were removed. The printer head from which the ink cartridge and the head cap were removed was left to stand in a 50°C, 15% RH environment for 3 days.

Then the printer head left in the carriage was loaded as before, the ink cartridge which had been left in a normal-temperature, normal-humidity environment was reloaded therein, and cleaning operation was repeated until all nozzles ejected inks in the same manner as the initial stage. The recoverability was evaluated according to the following standard.
AA: Clogging was resolved after 6 times of cleaning operation
A: Clogging was resolved after 12 times of cleaning operation
B: Clogging was resolved after 16 times of cleaning operation
C: Clogging could not be resolved after 16 times of cleaning operation

The results are shown in Table 1.

Clogging recoverability in high-temperature, normal-humidity closed system

An ink set including Y, M, C, and K inks obtained as above was prepared and charged into an ink cartridge of an ink jet printer (PXG 930 product of Seiko Epson Corporation). The cartridge was loaded in the printer. Inks were charged in a printer head using a printer driver and it was confirmed that normal recording was possible. In accordance to a usual operation procedure, the switch was pressed to turn the power off. The printer was unplugged and left to stand in a 40°C, 45% RH environment for 3 days.

Then the printer was turned on, and cleaning operation was repeated until all nozzles ejected inks in the same manner as the initial stage. The recoverability was evaluated according to the following standard.
AA: Clogging was resolved after 6 times of cleaning operation
A: Clogging was resolved after 12 times of cleaning operation
B: Clogging was resolved after 16 times of cleaning operation
C: Clogging could not be resolved after 16 times of cleaning operation

The results are shown in Table 1. Table 1 shows that ink compositions containing trehalose have good clogging recoverability in a high-temperature, low-humidity open system. HS20 is a non-reducing sugar containing a large amount of tetrasaccharides. Since HS20 has a low hygroscopicity, the performance was relatively satisfactory. HS60 is a non-reducing sugar containing a large amount of disaccharides. HS500 is a non-reducing sugar containing a large amount of monosaccharides. Since HS60 and HS500 do not have sufficiently low hygroscopicity, satisfactory results were not obtained.

### Evaluation of ink beading (image quality) (beading property)

An ink set including Y, M, C, and K inks obtained as above was prepared and charged into an ink cartridge of an ink jet printer (PX-F8000 product of Seiko Epson Corporation) so that recording could be conducted at 360 dpi in a main scanning (head driving) direction and at 720 dpi in a sub-scanning (recording medium-feeding) direction. Then the voltage applied to piezoelectric elements of the printer head was adjusted so that the dot side at the time of landing was about 3 ng. A 720 × 1440 dpi solid image was recorded on OKT+ (product of Oji Paper Co., Ltd.) having a weight of about 128 g/m² at 360 × 720 dpi per drive. (This corresponds to a high-quality-printing mode for glossy paper of the printer driver for the PX-F8000.) Recording was conducted in a normal-temperature, normal-humidity (25°C, 45% RH) environment. The amount of ink of single color that adhered at 100% duty was about 3.1 mg/inch².

The distance between the recording paper and the recording head was 1 mm. The recorded image was an image of a secondary color in which single colors of the same duty were mixed.

The resulting image was evaluated according to the following standard.
AA: Up to a 180% duty secondary color constituted by 90% duty single colors was reproduced without beading.
A: Up to a 160% duty secondary color constituted by 80% duty single colors was reproduced without beading.
B: Up to a 140% duty secondary color constituted by 70% duty single colors was reproduced without beading.
C: Up to a 120% duty secondary color constituted by 60% duty single colors was reproduced without beading. The results are shown in Table 1.

Evaluation of ink bleeding (image quality) (bleeding property)

An ink set including Y, M, C, and K inks obtained as above was prepared and charged into an ink cartridge of an ink jet printer (PX-F8000 product of Seiko Epson Corporation) so that recording could be conducted at 360 dpi in a main scanning (head driving) direction and at 720 dpi in a sub-scanning (recording medium-feeding) direction. Then the voltage applied to piezoelectric elements of the printer head was adjusted so that the dot side at the time of landing was about 3 ng. A 720 × 1440 dpi solid image was recorded on OKT+ (product of Oji Paper Co., Ltd.) having a weight of about 128 g/m² at 360 × 720 dpi per drive. (This corresponds to a high-quality-printing mode for glossy paper of the printer driver for the PX-F8000.) Recording was conducted in a normal-temperature, normal-humidity (25°C, 45% RH) environment. The amount of ink of single color that adhered at 100% duty was about 3.1 mg/inch².

The distance between the recording paper and the recording head was 1 mm.

The recorded image was an image in which a 160% duty secondary color composed by 80% duty single colors was in contact with 2 to 8 pixel ruled lines of a duty 80% primary color.

The resulting image was evaluated according to the following standard.
AA: 4/720 inch ruled lines were reproduced without bleeding but 2/720 inch ruled lines could not be reproduced due to bleeding.
A: 6/720 inch ruled lines were reproduced without bleeding but 4/720 inch ruled lines could not be reproduced due to bleeding.
B: 8/720 inch ruled lines were reproduced without bleeding but 6/720 inch ruled lines could not be reproduced due to bleeding.
C: 10/720 inch ruled lines could not be reproduced due to bleeding.

The results are shown in Table 1.

Ink compositions and ink sets of Examples 6 to 10 and Comparative Examples 6 to 10 were prepared as in Examples 1 to 5 and Comparative Examples 1 to 5 except that 1,2-hexanediol was changed to 1,6-hexanediol. The ink compositions and ink sets of Examples 6 to 10 and Comparative Examples 6 to 10 were evaluated as described above.

The results of evaluation were the same even when 1,2-hexanediol was changed to 1,6-hexanediol.

Ink compositions and ink sets of Examples 11 to 15 and Comparative Examples 11 to 15 were prepared as in Examples 1 to 5 and Comparative Examples 1 to 5 except that 1,2-hexanediol was changed to 3-methyl-1,5-pentanediol. Evaluation was conducted as in above, and the results of evaluation were the same even when 1,2-hexanediol was changed to 3-methyl-1,5-pentanediol.

Ink compositions and ink sets of Examples 16 to 30 and Comparative Examples 16 to 30 were prepared as in Examples 1 to 15 and Comparative Examples 1 to 15 except that amount of glycerin was changed to 0 mass% and the amount of ultrapure water was increased to compensate the amount of glycerin. When evaluation was conducted, the clogging recoverability in the high-temperature, low-humidity open system deteriorated by one rank, but the evaluation results were the same regarding other evaluation items regardless of the change in amount of the glycerin.

Ink compositions and ink sets of Examples 31 to 60 and Comparative Examples were prepared as in Examples 1 to 30 and Comparative Examples 1 to 30 except that the surfactant was changed to an acetylene glycol surfactant, Olfine E1010 produced by Nissin Chemical Industry Co., Ltd. (an alkylene oxide adduct of 2,4,7,9-tetramethyl-5-decyn-4,7-diol) or an acetylene glycol surfactant, Surfynol 104 produced by Air Products and Chemicals Inc. (2,4,7,9-tetramethyl-5-decyn-4,7-diol). When evaluation was conducted, the results of evaluation for the beading property and the bleeding property were C, but the evaluation results were the same regarding other evaluation items regardless of the change in type of the surfactant.

The acetylene glycol surfactant had a dynamic surface tension of 27 mN/m or more at 1 Hz when prepared into an aqueous solution containing 20 mass% glycerin, 10 mass% 1,2-hexanediol, 0.1 mass% acetylene glycol surfactant, and 69.9 mass% water. In particular, when the dynamic surface tension at 1 Hz (= one bubble per second) was measured with a bubble pressure tensiometerBP2 (product of KRUSS GmbH), the dynamic surface tension of the aqueous solution at 1 Hz was 27.8 mN/m.

## Claims

1. An ink composition for ink jet recording, comprising:
a coloring material;
water;
a sparingly water-soluble alkanediol;
a crystalline sugar alcohol solid at 20°C; and
a (poly)alkylene glycol.

2. The ink composition of claim 1, wherein the crystalline sugar alcohol is trehalose.

3. The ink composition of claim 1 or 2, further comprising a water-soluble alkanediol.

4. The ink composition of any of claims 1 to 3, wherein the sparingly water-soluble alkanediol is an alkanediol having an OH group at one end.

5. The ink composition of any of claims 1 to 4, wherein the sparingly water-soluble alkanediol is an alkanediol having 7 or more carbon atoms.

6. The ink composition of any of claims 1 to 5, wherein the (poly)alkylene glycol is (poly)propylene glycol.

7. The ink composition of claim 6, wherein the (poly)propylene glycol is of a diol type.

8. The ink composition of any of claims 1 to 7, wherein a ratio of a sparingly water-soluble alkanediol content to a (poly)alkylene glycol content is 1:1 to 1:5.

9. The ink composition of any of claims 1 to 8, wherein a ratio of a sparingly water-soluble alkanediol content to a crystalline sugar alcohol content is 1:1 to 1:5.

10. The ink composition of any of claims 1 to 9, wherein a ratio of a sum of a (poly)alkylene glycol content and a crystalline sugar alcohol content to a sparingly water-soluble alkanediol content is 2:1 to 20:1.

11. The ink composition of any of claims 1 to 10, wherein a sum of a sparingly water-soluble alkanediol content and a (poly)alkylene glycol content or a crystalline sugar alcohol content is 24 mass% or less relative to the ink composition.

12. The ink composition of any of claims 1 to 11, wherein the sparingly water-soluble alkanediol is contained in an amount of 1.0 to 4.0 mass% relative to the ink composition.

13. The ink composition of any of claims 1 to 12, wherein the (poly)alkylene glycol is contained in an amount of 2.0 to 10.0 mass% relative to the ink composition.

14. The ink composition of any of claims 1 to 13, wherein the crystalline sugar alcohol is contained in an amount of 2.0 to 10.0 mass% relative to the ink composition.

15. The ink composition of any of claims 1 to 14, wherein the sparingly water-soluble alkanediol is 1,2-octanediol.
